# EUROPEAN PATENT APPLICATION

(11) **EP 4 596 283 A1**
(43) Date of publication of application: **06.08.2025**
(21) Application number: 25155654.4
(22) Date of filing: 03.02.2025
(51) Int. Cl.: B60K 6/10, B60K 6/12, B60K 6/20, B60K 6/46, B60W 10/06, B60W 10/08, B60W 10/30, B60W 20/11, B60W 30/188, B60W 50/08

(54) **IMPROVED METHOD FOR CONTROLLING A WORK VEHICLE AND RELATED WORK VEHICLE**

(30) Priority: 05.02.2024 IT 202400002370
(71) Applicant: CNH Industrial Italia S.p.A., 10156 Torino (IT)
(72) Inventor: Mariniello, Ciro, 10156 Turin (IT); Grossi, Federica, 10156 Turin (IT); Bonavolontà, Gaetano, 10156 Turin (IT); Scolari, Fabio, 10156 Turin (IT); Morini, Lorenzo, 10156 Turin (IT)
(74) Representative: CNH Industrial IP Department

(57) **Abstract**

There is described a method for controlling a work vehicle (1) comprising: a body movable on the ground by means of a plurality of ground-engaging means (5); and a powertrain assembly (3) carried by said body and comprising an internal combustion engine (6) and a drivetrain assembly (8) operatively interposed between said internal combustion engine (6) and said ground-engaging means (5);
the method comprising the steps of:
• receiving a request to operate said powertrain assembly (3) to provide at output a useful power (Pᵢ);
• determining the operating point (Q₁) of said powertrain assembly (3) wherein said powertrain assembly (3) is able to provide at output said useful power (Pᵢ) and at the same time has the maximum efficiency, and
• controlling said powertrain assembly (3) to operate at the operating point (Q₁) determined in step b).

## Description

### TECHNICAL FIELD

The present invention relates to a method for controlling a work vehicle and to a work vehicle implementing such method.

The present invention finds its preferred, although not exclusive, application in a method for improving the efficiency of a work vehicle. Reference will be made to this application by way of example below, without however losing in generality.

### BACKGROUND OF THE INVENTION

As is known, work vehicles such as tractors or similar agricultural vehicles are usually provided with a powertrain assembly configured to provide torque to allow motion of the work vehicle on the ground.

More in detail, such powertrain assembly usually comprises an internal combustion engine, for example a diesel-powered or a methane-powered internal combustion engine, and a drivetrain assembly operatively interposed between the internal combustion engine and the ground engaging wheels or tracks.

The drivetrain assembly may be provided with a hybrid architecture, for example a serial-hybrid architecture, a parallel hybrid architecture or a combination thereof.

In addition or alternative, the drivetrain assembly may comprise a continuously variable transmission such as a power-split hydromechanical transmission, a full power-shift transmission, a semi power-shift transmission or a combination thereof.

The aforementioned work vehicle further comprises additional sub-system and/or implements, which are powered by the internal combustion engine, such as a fan, an air conditioning system, a hydraulic power-steering system, and/or the like.

To reduce fuel consumption, the internal combustion engine is generally operated at a point able to meet the temporary power output demand while maximizing its efficiency.

However, under certain operating conditions, the most efficient operating point of the internal combustion engine alone may coincide with a low efficiency operating point of the drivetrain assembly and/or of the other subsystems of the work vehicle, with the obvious drawbacks this entail.

In fact, this may result in a poor efficiency of the overall work vehicle powertrain and therefore in high fuel consumptions.

In view of the above, the need is felt for improvements in the field of work vehicles, in particular by addressing the aforementioned drawbacks and providing a control method for optimizing the overall efficiency of the work vehicle powertrain assembly.

Aim of the present invention is therefore to satisfy the abovementioned needs in a cost effective and optimized manner.

### SUMMARY OF THE INVENTION

The aforementioned aims are reached by the methods, by a work vehicle, and by a work vehicle and trailer combination as claimed in the appended set of claims.

### BRIEF DESCRIPTION OF DRAWINGS

For a better understanding of the present invention, a preferred embodiment is described in the following, by way of a non-limiting example, with reference to the attached drawings, wherein:
- Figure 1 is a schematic representation of a work vehicle according to the present invention;
- Figure 2 is a schematic efficiency map of an internal combustion engine of the work vehicle illustrated in Figure 1;
- Figure 3 is a schematic efficiency map of an electric generator of the work vehicle illustrated in Figure 1;
- Figure 4 is a schematic efficiency map of a powertrain assembly of the work vehicle illustrated in Figure 1;
- Figures 5, 6 and 7 are schematic and exemplarily representations of the operation of a control method according to the present invention; and
- Figure 8 is a block diagram of a part of a control method according to the present invention.

### DETAILED DESCRIPTION OF THE INVENTION

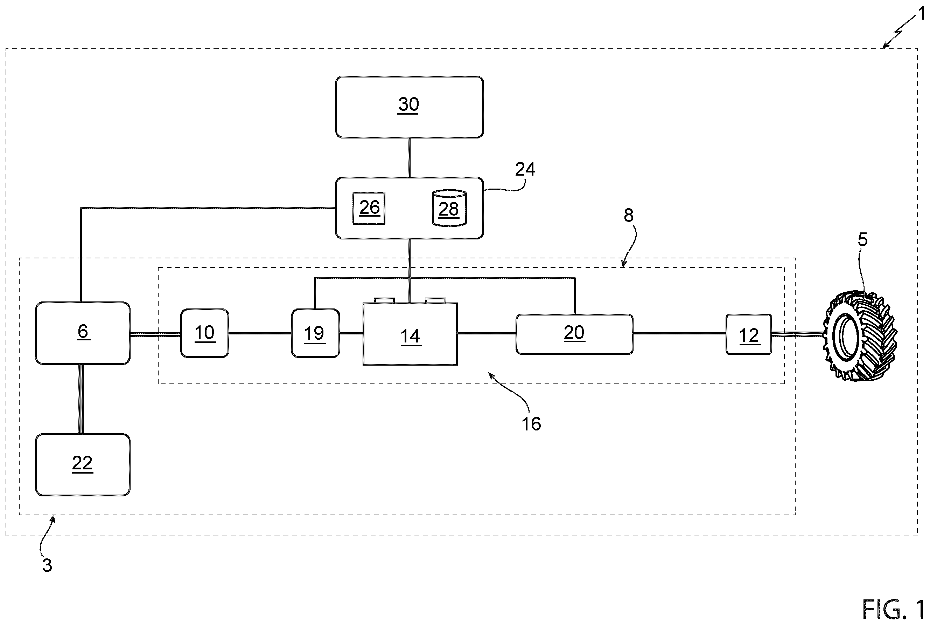

With reference to Figure 1, reference number 1 denotes as a whole a work vehicle, for example an agricultural vehicle such as a tractor, a combine harvester, a forage harvester, a grape harvester, a telehandler or the like.

Work vehicle 1 comprises a powertrain assembly 3, which is carried by a work vehicle body (not illustrated) and is configured to provide torque to allow motion of the work vehicle body with respect to the ground, e.g. thanks to at least a pair of ground engaging means 5, such as wheels or tracks.

With reference to the exemplary embodiment shown in Figure 1, powertrain assembly 3 comprises an internal combustion engine 6 (in the following referred to as "ICE"), for example a diesel-powered or a methane-powered ICE.

In addition, work vehicle 1 further comprises a drivetrain assembly 8, which is operatively interposed between ICE 6 and ground engaging means 5 and is configured to transmit the torque provided by ICE 6 to ground engaging means 5.

According to the preferred embodiment of the present invention, drivetrain assembly 8 may be provided with a hybrid-electric portion interposed between ICE 6 and ground engaging means 5.

With reference to the preferred non limiting embodiment illustrated in Figure 1, drivetrain assembly 8 may be provided with a serial hybrid-electric configuration.

More in detail, drivetrain assembly 8 is preferably provided with: a first electric machine 10, in particular an electric generator 10, carried by ICE 6; and a second electric machine 12, in particular an electric motor 12, which is electrically connected to first electric machine 10 and is mechanically connected to ground engaging means 5.

In addition, work vehicle 1 may further comprise an energy storage system configured to store at least part of the mechanical energy produced by ICE 6.

More in detail, according to the preferred embodiment illustrated in Figure 1, work vehicle 1 may further comprise an electric energy storage system 14, in the following also referred to as "accumulator means", which is electrically connected to first electric machine 10 and to second electric machine 12 by means of electric power management means 16.

More in detail, first electric machine 10 is preferably mechanically coupled to the ICE 6 and, as known, is configured to transform the mechanical energy provided by the same ICE 6 into electric energy. Such electric energy may be stored into the accumulator means 14 and/or may be provided to second electric machine 12.

Second electric 12, on the other hand, is configured to provide torque to the ground engaging means 5 to allow motion of the work vehicle body with respect to the ground and optionally to transform the mechanical energy of work vehicle 1 into electric energy during work vehicle braking operation.

According to the preferred embodiment of the present invention, accumulator means 14 comprises chemical-type accumulators. More in detail, accumulator means 14 preferably comprises a battery pack, in particular a lithium-ion battery pack.

Alternatively, accumulator means 14 may comprise one or more supercapacitors.

Electric power management means 16 preferably comprise a power distribution unit, PDU, electrically connected to first electric machine 10, to second electric machine 12 and accumulator means 14, in order to manage the electric energy transfer among them.

Preferably, the connection of power distribution unit 18 is realized via inverters 19 and 20, which are operatively interposed between the accumulator means 14 and a corresponding electric machine 10 or 12.

With reference to the exemplary embodiment illustrated in Figure 1, work vehicle 1 preferably further comprises one or more additional sub-systems 22 and/or implements carried by the ICE 6. Sub-system/s 22 are preferably operatively connected to ICE 6 and, in use, they may absorb power from the latter.

For example, sub-systems 22 may comprise a fan, an alternator, a hydraulic power-steering system, a hydraulic system and/or the like.

According to the preferred embodiment of the present invention, work vehicle 1 further comprises an electronic control unit 24, which is electrically connected at least to powertrain assembly 3 and is provided with elaboration means configured to control its operation according to the control method described more in detail in the following.

Such control method, for instance, may be deployed into a specific computer program, which can be downloaded into the electronic control unit 24 and is configured to be executed by such electronic control unit 24.

More in detail, electronic control unit 24 may comprise processing means 26 and storage means 28. Storage means 28 may include computer-readable means having stored thereon which include instructions which, when executed by the processing means 26, causes the same processing means 26 to carry out the control method as described in the following.

More in detail, electronic control unit 24 is preferably operatively connected to ICE 6 and to drivetrain assembly 8.

In addition, storage means 28 may be configured to store autonomous driving algorithms suited to provide the same processing means 26 with instructions to automatically control the operation of at least powertrain assembly 3, in a manner per se known and therefore non further described.

In particular, according to the disclosed embodiment, electronic control unit 24 is preferably operatively connected to accumulator means 14, to first electric machine 10, to second electric machine 12 and to PDU 16.

According to the disclosed embodiment, work vehicle 1 further comprises a user interface 30, which is electrically connected to control unit 24 and is configured to allow the user to impart driving commands to work vehicle 1 to control its operation.

For instance, as per se known, user interface 30 may comprise one or more pedals and/or one or more joysticks configured to allow the user to impart commands to control the ground speed of work vehicle 1, in particular its velocity and/or its acceleration.

More in detail, electronic control unit 24 may be operatively connected to said pedals and/or to said joysticks and may be configured to control the operation of powertrain assembly 3, in particular of ICE 6 and of drivetrain assembly 8, as function of the commands imparted by work vehicle 1 driver through said pedals and/or said joysticks.

According to the disclosed embodiment, electronic control unit 24 is configured to receive a request to control powertrain assembly 3 in order to provide at output a useful power Pᵢ.

In other words, electronic control unit 24 may be configured to receive a request to control powertrain assembly 3 in order to provide at output a certain amount of torque and/or to reach a certain ground speed.

In particular, useful power Pᵢ may correspond to the power to be transmitted to ground engaging means 5, to the power to be transmitted to a power-take-off assembly of the same work vehicle 1 and/or to a combination thereof.

Such request may depend on commands imparted by a work vehicle driver by means of user interface 30, in particular by means of said pedals and/or said joysticks.

Alternatively, such request may depend on the autonomous driving algorithms stored within said storage means 26.

In addition, as explained more in detail hereinafter, electronic control unit 24 is configured to determine the operating point of powertrain assembly 3 that maximizes the overall fuel efficiency of the same powertrain assembly 3 and at the same time provides at output said useful power Pᵢ.

Such operating point of powertrain assembly 3 preferably includes at least the angular speed and the output torque of ICE.

In addition, the operating point of powertrain assembly 3 may include the angular speed and/or the torque of first electric machine 10 and/or second electric machine 12.

According to the preferred embodiment of the present invention, storage means 28 may be configured to store data related to the efficiency of ICE 6, in particular related to the Brake Specific Fuel Consumptions (BSFC) of ICE 6.

In other words, storage means 28 may be configured to store a table, such as a look-up table, including data related to the fuel efficiency of ICE 6 as function of the angular speed of the same ICE 6 and as function of the load, i.e. of the output torque, provided by the same ICE 6.

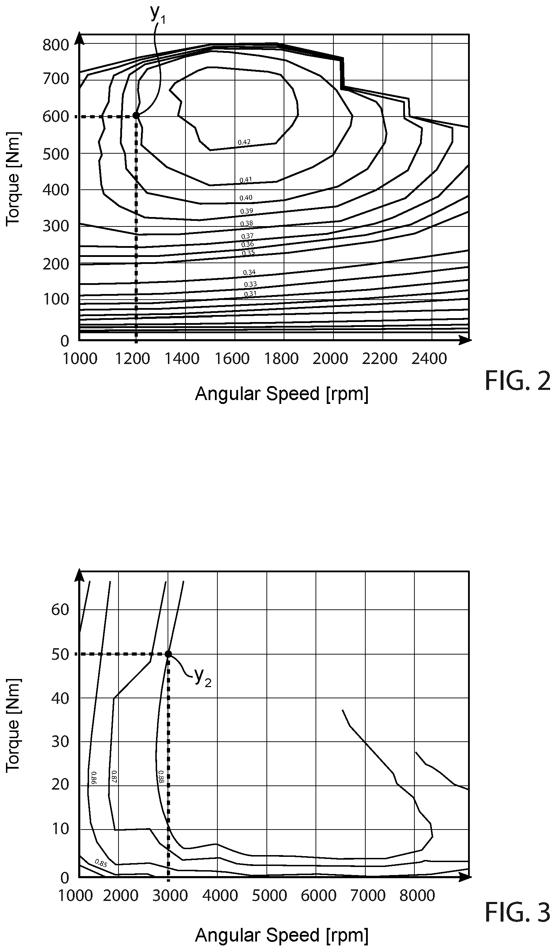

For example, Figure 2 schematically represents a bidimensional contour map representing the fuel efficiency of ICE 6 as function of the angular speed and the brake torque of the same ICE 6, wherein the different regions identified by the depicted lines include operating points of ICE 6 with the same efficiency.

With reference to the example illustrated in Figure 2, in particular, point Y₁ corresponds to an operating point of operation of ICE 6 where its rotational speed is 1200 rpm (revolutions per minute) and the torque output is 600 Nm (newton-meter). According to the illustrated example, at such operating point, the efficiency of the same ICE 6 is 0,41.

In addition, storage means 28 may be configured to store data related to the efficiency of drivetrain assembly 8.

More in detail, storage means 28 may be configured to store data related to the efficiency of the hybrid-electric portion of drivetrain assembly 8.

For example, storage means 28 may be configured to store data related to the efficiency of first electric machine 10, i.e. electric generator 10.

More in detail, storage means 28 may be configured to store a table, such as a look-up table, including data related to the efficiency of first electric machine 10 as function of the angular speed of the same first electric machine 10 and as function of the load, i.e. of the torque, provided to the same first electric machine 10.

For example, Figure 3 schematically represents a bidimensional contour map representing the fuel efficiency of first electric machine 10 as function of the angular speed of the latter and of the torque applied to the same first electric machine 10, wherein the different regions identified by the depicted lines include operating points of first electric machine 10 with the same efficiency.

With reference to the example illustrated in Figure 3, in particular, point Y₂ corresponds to an operating point of operation of first electric machine 10 where its rotational speed is 3000 rpm and the torque output is 50 Nm. According to the illustrated example, at such operating point, the efficiency of the same first electric machine 10 is 0,88.

In addition, storage means 28 may be configured to store data related to power absorbed by sub-system/s 22, for example as function of the angular speed of ICE 6.

More in detail, storage means 28 may be configured to store a table, such as a look-up table, including data related to the power absorbed by sub-system/s 22, for example as function of the angular speed of ICE 6.

With reference to the preferred embodiment of the present invention, processing means 26 may be configured/programmed to combine the data related to the efficiency of ICE 6 and the data related to the efficiency of drivetrain assembly 8 in order to calculate the overall efficiency of powertrain assembly 3.

More in detail, processing means 26 may be programmed to calculate/elaborate a table including data related to the overall efficiency of powertrain assembly 3, for example as function of the angular speed of the ICE 6 and as function of the load, i.e. of the brake torque, applied on the same ICE 6.

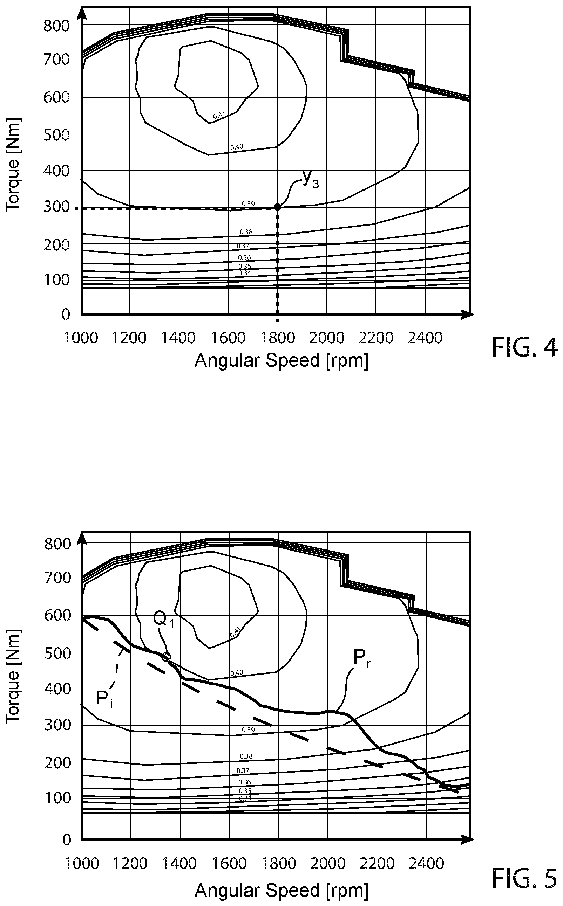

For example, Figure 4 schematically represents a bidimensional contour map representing the efficiency of powertrain assembly 3 as function of the angular speed and of the output torque of ICE 6, wherein the different regions identified by the depicted lines include operating points of powertrain assembly 3 with the same efficiency.

With reference to the example illustrated in Figure 4, in particular, point Y₃ corresponds to an operating point of operation of powertrain assembly 3 where the rotational speed of ICE 6 is 1800 and the torque output of the latter is 300 Nm. According to the illustrated example, at such operating point, the efficiency of the same powertrain assembly 3 is 0,39.

In other words, processing means 26 may be programmed to calculate the efficiency map of powertrain assembly 3.

In particular, processing means 26 may be programmed to calculate the efficiency map of powertrain assembly 3 as function of the angular speed of the ICE 6 and as function of the load, i.e. of the torque provided by the same ICE 6.

For example, the efficiency of powertrain assembly 3 may be calculated by combining the efficiency data of ICE 6 and the efficiency data of drivetrain assembly 8.

More in detail, the efficiency of powertrain assembly 3 may be calculated by averaging, in particular by calculating the weighted average, the efficiency data of ICE 6 and the efficiency data of drivetrain assembly 8.

In alternative, storage means 28 may be configured to store predetermined data related to the overall efficiency of powertrain assembly 3.

In other words, storage means 28 may be configured to store the overall efficiency map of powertrain assembly 3.

In addition, storage means 28 may be configured to store data related to the power absorbed by sub-system/s 22, i.e. data related to the power losses introduced by sub-systems 22.

More in detail, storage means 28 may be configured to store data related to the power absorbed by sub-system/s 22 as function of the operating conditions of powertrain assembly 3.

For instance, storage means 28 may be configured to store data related to the power absorbed by sub-system/s 22 as function of the angular speed of ICE 6.

In use, processing means 26 may be configured to control the operation of powertrain assembly 3 as function of the data retrieved from storage means 28.

In particular, according to the preferred embodiment of the present invention, processing means 26 may be configured to control the operation of ICE 6 and first electric machine 10 as function of the data retrieved from storage means 28.

More in detail, with reference to the example illustrated in Figure 5, processing means 28 are preferably configured to determine/calculate the operating point Q₁ of powertrain assembly 3 that maximizes the overall fuel efficiency of the same powertrain assembly 3 and at the same time is able to provide at output the useful power Pᵢ.

In particular, processing means 28 are preferably programmed to determine/calculate the operating point Q₁ of ICE 6 and of first electric machine 10 that maximizes the overall fuel efficiency of the same powertrain assembly 3 and at the same time is able to provide at output the useful power Pᵢ.

In other words, processing means 26 are preferably programmed to determine/calculate at least the angular speed and the output torque of ICE 6 and/or of second electric machine 12 that maximize the overall fuel efficiency of the same powertrain assembly 3 and at the same time is able to provide at output the useful power Pᵢ.

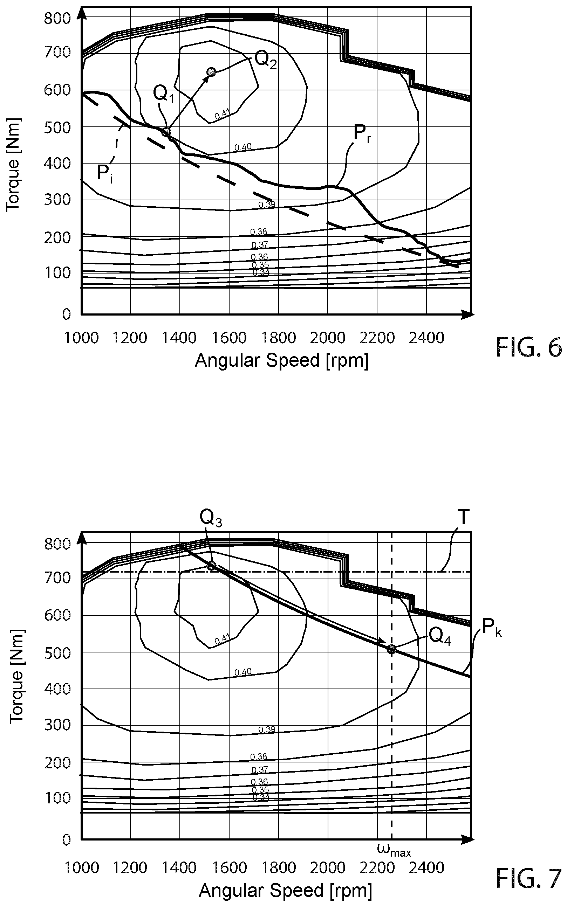

In addition, with reference to the preferred embodiment illustrated in Figure 6, processing means 26 may be programmed to determine if operating point Q₁ corresponds with the maximum efficiency point of powertrain assembly 3.

If operating point Q₁ corresponds with the maximum efficiency point of powertrain assembly 3, processing means 26 may be configured to operate powertrain assembly 3 at such operating point Q₁.

If operating point Q₁ does not correspond with the maximum efficiency point of powertrain assembly 3, processing means 26 may be configured to control powertrain assembly 3 to operate at its maximum efficiency point Q₂.

Clearly, such operation may be performed only if the output power provided by powertrain assembly 3 at operating point Q₂ is greater than the output power provided by the same powertrain assembly 3 at operating point Q₁, in order to meet the power request received.

The exceeding power provided by powertrain assembly 3 at operating point Q₂ may be provided to first electric machine 10, to convert such power into mechanical energy to be stored within the energy storage system for a later use.

The technical effect of the above operation is related to the possibility to exploit, in every operation condition, the maximum efficiency of the powertrain assembly 3, possibly storing within the energy storage system the excess energy produced by the powertrain assembly 3.

This, for example, may be particularly advantageous when it is requested a very low torque at output and to avoid the powertrain assembly 3 to operate in a very low efficiency region, the same powertrain assembly 3 is still operated in a high efficiency region and the excess power stored within energy storage system, for example it is used to recharge the accumulator means 14.

In addition, according to the preferred embodiment illustrated in Figure 7, should the operating point of ICE 6 exceed a predetermined threshold T, processing means 26 may be programmed implement an anti-shut down strategy, which comprises to control ICE 6 to operate at its angular speed ωₘₐₓ corresponding to the maximum output power of ICE 6, and at the same time to reduce/modify the output torque provided by the same ICE 6 in order to meet the power requested.

The technical effect of the above operation is related to the possibility to manage sudden peak power requested at the powertrain assembly 3 and to avoid undesired ICE 6 shut down.

This, for example, may be particularly advantageous when an obstacle is encountered during the work vehicle operation, for instance a rock during a ploughing operation with a tractor or a mound of earth during a loading operation with a wheel loader.

Preferably, user interface 30 may comprise input means, such as a button, a knob, or a portion of a touch-sensitive display, which may allow the user to impart commands to electronic control unit 24 to enable or disable said an anti-shut down strategy.

The operation of the above-described work vehicle 1 is schematically represented in Figures 5, 6 and 7 and will be described in the following.

With reference to Figure 5, at first, a request to provide at output a useful power Pᵢ is received.

For example, work vehicle driver may impart commands, by means of user interface 30, to control powertrain assembly 3 to provide at outlet a certain output/net power Pᵢ, for example at ground engaging means 5.

In other words, work vehicle driver may provide commands, by means of user interface 30, in order to reach a certain ground speed and/or to control powertrain assembly 3 to provide at output a certain torque.

Alternatively, this first phase may comprise to provide processing means 26 with a request to reach a certain ground speed and/or to control powertrain assembly 3 to provide at output a certain torque based on instructions stored in the autonomous driving algorithm.

Then, in a second phase, based on the data related to the efficiency of powertrain assembly 3, processing means 26 calculate the operating point Q₁ of powertrain assembly 3 able to meet the request imparted by the driver and at the same time maximize the efficiency of the same powertrain assembly 3.

More in detail, such phase comprises determining the operating point Q₁ of powertrain assembly 3 able to maximize the efficiency of the same powertrain assembly 3 and at the same time to compensate for the power absorbed by drivetrain assembly 8 and the power losses introduced by sub-systems 22 while meeting the power request imparted by work vehicle driver.

Such operation is schematically represented in Figure 5, wherein dashed line Pᵢ corresponds with the output power to be provided by powertrain assembly 3 at ground engaging means 5.

Pᵣ, on the other hand, corresponds to the gross power to be provided at output by powertrain assembly 3 and is equal to the sum between output power Pᵢ plus the power absorbed by drivetrain assembly 8 and the power absorbed by sub-system/s 22.

Q₁ is the operating point of powertrain assembly 3 able to maximize the efficiency of the same powertrain assembly 3 and at the same time to compensate for the power absorbed by sub-systems 22 while meeting the power request imparted by work vehicle driver, i.e. to provide at output useful power Pᵢ.

In addition, with reference to Figure 6, should operating point Q₁ not correspond with the maximum efficiency point of powertrain assembly 3, electronic control unit 24 controls powertrain assembly 3 to operate at its maximum efficiency point Q₂ and at the same time feed the exceeding power provided by powertrain assembly 3 to first electric machine 10, in order to convert such power into mechanical energy to be stored within accumulator means 14 for a later use.

Moreover, with reference to Figure 7, suppose that a request to provide at output useful power Pₖ is received and electronic control units calculates the most efficient point of powertrain assembly Q₃. Should the operating point Q₃ of ICE 6 exceed the threshold T, electronic control unit 24 controls ICE 6 to reach operating point Q₄ increasing its angular speed at the angular speed ωₘₐₓ corresponding to the maximum output power of ICE 6, and at the same time reducing the output torque provided by the same ICE 6 in order to meet the power requested, in order to be able to manage sudden peak power request at the powertrain assembly 3 and to avoid unwanted ICE 6 shut down.

According to the disclosed embodiment, the present invention is directed to a method for controlling a work vehicle 1 as described above.

The method comprises the following steps:
a) receiving a request to operate powertrain assembly 3 to provide at output the useful power Pᵢ;
b) determining the operating point Q₁ of powertrain assembly 3 wherein the same powertrain assembly 3 is able to provide at output the useful power Pᵢ and at the same time has the highest efficiency, and
c) controlling powertrain assembly 3 to operate at operating point Q₁.

Preferentially, steps a) to c) are executed in order of mentioning.

According to the preferred embodiment of the invention, the operating point Q₁ of powertrain assembly 3 is determined based on the overall efficiency map of powertrain assembly 3, i.e. on the BSFC (Brake Specific Fuel Consumption) of powertrain assembly 3.

More in detail, the operating point Q₁ of powertrain assembly 3 is preferably determined on the basis of the combination of the efficiency map of the ICE 6 and the efficiency map of the drivetrain assembly 8.

According to the preferred embodiment of the present invention, the operating point Q₁ of powertrain assembly 3 is preferably determined on the basis of the combination of the efficiency map of the ICE 6 and the efficiency map of the hybrid-electric portion of drivetrain assembly 8.

In other words, the operating point Q₁ of powertrain assembly 3 is preferably determined on the basis of the combination of the efficiency map of the ICE 6, the efficiency map of first electric machine 10 and/or the efficiency map of second electric machine 12.

In addition, step b) preferably the step of determining the angular speed and the output torque of ICE 6 and the angular speed and the output torque of second electric machine 12 such that powertrain assembly 3 is able to provide at output the useful power Pᵢ and at the same time has the maximum efficiency.

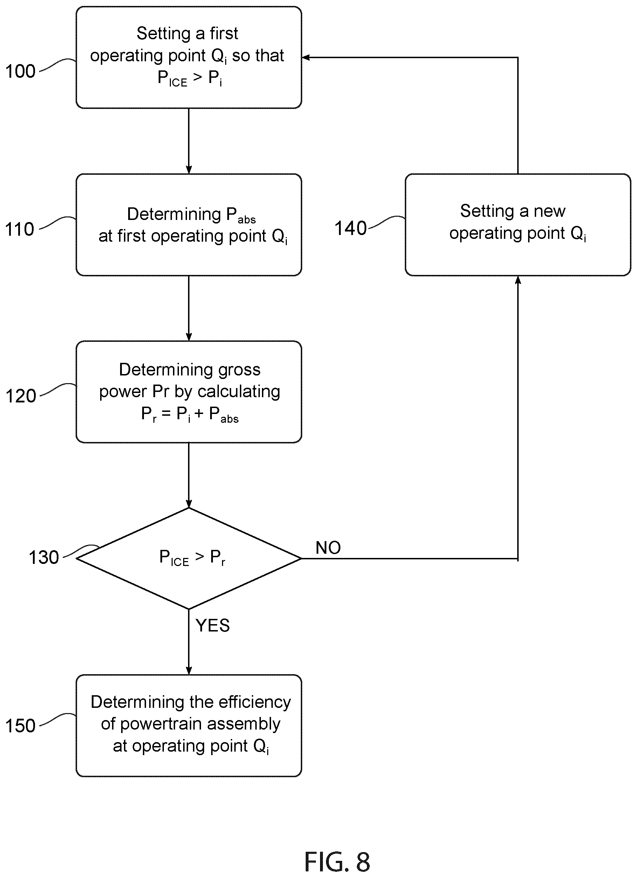

More in detail, with reference to Figure 8, step b) preferably comprises the steps of:
d) setting a first operating point Qᵢ of powertrain assembly 3 such that the engine power P_{ICE} provided by ICE 6 is greater than useful power Pᵢ (block 100),
e) determining the power loss P_{abs} absorbed by sub-system/s 22 at operating point Qᵢ of powertrain assembly 3 (block 110),
f) determining the gross power Pᵣ to be provided at output by ICE 6 to compensate for the power P_{abs} absorbed by drivetrain assembly 8, by summing the useful power Pᵢ calculated in step d) and the power P_{abs} absorbed by drivetrain assembly 8 calculated in step e) (block 120),
g) verifying if engine power P_{ICE} is greater than gross power Pᵣ (block 130),
h) if engine power P_{ICE} is lower than gross power Pᵣ, than setting a new operating point Qᵢ₊₁ (block 140),
i) if engine power P_{ICE} is greater than gross power Pᵣ, then determining the efficiency of powertrain assembly 3 at operating point Qᵢ based on the efficiency data of powertrain assembly 3 (block 150).

The method then preferably comprises the step of repeating steps d) to i) varying recursively the first operating point Qᵢ, in order to reach the most efficient operating point Q₁ of powertrain assembly 3 able to meet the power request received in step a).

More in detail, the step of repeating steps d) to i) varying recursively the first operating point Qᵢ to reach the most efficient operating point Q₁ of powertrain assembly 3 able to meet the power request received in step a) may comprise to solve a numerical constrained optimization problem.

Any known numerical optimization method may be applied to the method according to the proposed invention.

Preferably, based on the data included in the efficiency map of powertrain assembly 3, the step of varying recursively the first operating point Qᵢ may comprise to vary such operating point Qᵢ according to the maximum gradient of the efficiency of powertrain assembly 3.

More in detail, starting from the first operating point Qᵢ and based on the data included in the efficiency map of powertrain assembly 3, the step of varying recursively said operating point Qᵢ may comprise to vary by a predetermined amount the angular speed and the output torque of ICE 6 and/or second electric machine 12 in order to move the operating point Qᵢ according to the maximum gradient of efficiency of powertrain assembly 3, i.e. by moving the same operating point Qᵢ within the efficiency map of powertrain assembly 3 in a direction orthogonal to the iso-efficiency lines of the bidimensional contour map representing the efficiency of powertrain assembly 3.

This, for example, starting from the first operating point Qᵢ and based on the data included in the efficiency map of powertrain assembly 3, may comprise to evaluate the efficiency of the operating may comprise to determine a new operating point Qᵢ by changing the angular speed and/or the output torque of ICE 6 and/or second electric machine 12 by a predetermined increment, to determine the efficiency of powertrain assembly associated with the new operating point Qᵢ and to repeat recursively these two steps until reaching the most efficient point Qᵢ within said increment from the first operating point Qᵢ.

Alternatively, based on the data included in the efficiency map of powertrain assembly 3, the step of varying recursively the first operating point Qᵢ may comprise to vary selectively and alternatively only the angular speed or the torque of ICE 6 and/or of second electric machine 12, so as to move the operating point Qᵢ, at every step of the method, only in a vertical direction or in a horizontal direction within the efficiency map of powertrain assembly 6.

According to the preferred embodiment of the present invention, the method may further comprise the following steps:
j) determining if operating point Q₁ corresponds with the maximum efficiency point of powertrain assembly 3 able to meet the power request received in step a),
k) if operating point Q₁ corresponds with the maximum efficiency point of powertrain assembly 3, operating powertrain assembly 3 at such operating point Q₁,
l) if operating point Q₁ does not correspond with the maximum efficiency point of powertrain assembly 3, then increase the output power of
m) operating powertrain assembly 3 at its maximum efficiency point Q₂ and storing the exceeding power provided by ICE 6 within the energy storage system.

More in detail, according to the preferred embodiment of the present invention, step m) preferably comprises to operate powertrain assembly 3 at its maximum efficiency point Q₂ and provide the exceeding power to the first electric machine 10, in order to convert such power into electric energy to be stored within the electric energy storage means 14.

Additionally, the method according to the preferred embodiment of the present invention may further comprise:
n) determining if the output torque of ICE 6 associated with the operating point of powertrain assembly 3 exceeds a predetermined threshold T,
o) if the output torque requested if the output torque of ICE 6 associated with the operating point of powertrain assembly 3 exceeds threshold T, controlling the ICE 6 to operate at its angular speed ωₘₐₓ corresponding to the maximum output power of ICE 6.

Preferably, step o) may further comprise to reduce/modify the output torque provided by the same ICE 6 in order to meet the power requested.

In view of the foregoing, the advantages of the method according to the present invention and of a work vehicle configured to carry out such method are apparent.

In fact, thanks to the proposed method, it is always possible to consider the power losses introduced by the whole kinematic chain of powertrain assembly 3 and sub-system 22 when operating powertrain assembly 3, allowing to operate the same powertrain assembly 3 at its maximum efficiency point. This clearly greatly improves the overall fuel consumptions of work vehicle 1.

In addition, this allows the useful power supplied by the ICE 6 to be managed efficiently, for example by running the same ICE 6 in a highly efficient zone even when very little torque is required at the output, and converting the exceeding power provided by the ICE 6 into electric energy to be stored within accumulator means 14 by means of first electric machine 10.

It is clear that modifications can be made to the described work vehicle and method which do not extend beyond the scope of protection defined by the claims.

For example, according to an alternative embodiment of the present invention, drivetrain assembly 8 may comprise a continuously variable hydrostatic transmission comprising a hydraulic pump carried by ICE 6 and a hydraulic motor driven by said hydraulic pump and mechanically coupled to ground engaging means 5, in a manner per se known and therefore not further described.

According to such embodiment, electronic control unit 24 may be configured to store data related to the efficiency of said hydrostatic transmission.

More in detail, electronic control unit 24 may be configured to store data related to the efficiency of the hydraulic pump of said hydrostatic transmission as function of the angular speed of the same hydraulic pump or as function of the swash plate angle of the same hydraulic pump and as function of the load, i.e. of the torque, provided by the same hydraulic pump.

In particular, storage means 28 may be configured to store a table, such as a look-up table, including data related to the related to the efficiency of the hydraulic pump.

In addition, electronic control unit 24 may be configured /programmed to combine the data related to the efficiency of ICE 6 and the data related to the efficiency of said hydrostatic transmission in order to calculate the overall efficiency of powertrain assembly **3.**

According to such alternative embodiment, electronic control unit 24 is programmed to determine/calculate the operating point Q₁ of ICE 6 and of hydrostatic transmission that maximizes the overall fuel efficiency of the same powertrain assembly 3 and at the same time is able to provide at output the useful power Pᵢ.

More detail, electronic control unit 24 is preferably programmed to determine/calculate the angular speed and the output torque of ICE 6 and the swash plate angle of hydraulic pump that maximize the overall fuel efficiency of the same powertrain assembly 3 and at the same time is able to provide at output the useful power Pᵢ.

Moreover, according to such alternative embodiment, energy storage means may comprise a hydraulic accumulator configured to store pressurized hydraulic fluid.

In addition, the aforementioned step m) of the method according to the invention may comprise to operate powertrain assembly 3 at its maximum efficiency point Q₂ and provide the exceeding power to said hydraulic pump, in order to store pressurized hydraulic fluid within said accumulator and convert such power into hydraulic energy.

According to a further embodiment of the present invention, energy storage means may comprise mechanical storage means, such as a flywheel.

The aforementioned step m) of the method according to the invention may comprise to operate powertrain assembly 3 at its maximum efficiency point Q₂ and control ICE 6 to provide the exceeding power to said mechanical storage means, in particular to said flywheel.

Lastly, according to a further embodiment of the present invention, work vehicle 1 may be configured to be connected to a trailer or work implement configured to be towed or carried by the same work vehicle 1, such as a baler or the like.

The aforementioned energy storage system may be configured to be carried by such trailer or work implement and may be configured to be operatively connected to ICE 6 of work vehicle 1.

## Claims

1. A method for controlling a work vehicle (1),
said work vehicle (1) comprising:
• a body movable on the ground by means of a plurality of ground-engaging means (5); and
• a powertrain assembly (3) carried by said body and comprising an internal combustion engine (6) and a drivetrain assembly (8) operatively interposed between said internal combustion engine (6) and said ground-engaging means (5);
said method comprising the steps of:
a) receiving a request to operate said powertrain assembly (3) to provide at output a useful power (Pᵢ);
b) determining the operating point (Q₁) of said powertrain assembly (3) wherein said powertrain assembly (3) is able to provide at output said useful power (Pᵢ) and at the same time has the maximum efficiency, and
c) controlling said powertrain assembly (3) to operate at the operating point (Q₁) determined in step b).

2. Method according to claim 1, wherein said work vehicle (1) further comprises one or more sub-systems (22) carried by said internal combustion engine (6);
said step b) comprising the steps of:
d) setting a first operating point (Qᵢ) of said powertrain assembly (3) such that the engine power (P_{ICE}) provided by said internal combustion engine (6) is greater than said useful power (Pᵢ),
e) determining the power loss (P_{abs}) absorbed by said subsystem/s (22) at said first operating point (Qᵢ) of said powertrain assembly (3),
f) determining the gross power (Pᵣ) to be provided at output by said internal combustion engine (6) by summing the useful power (Pᵢ) calculated in step d) and the power loss (P_{abs}) calculated in step e),
g) verifying if said engine power (P_{ICE}) is greater than said gross power (Pᵣ),
h) if said engine power (P_{ICE}) is lower than said gross power (Pᵣ), than setting a new operating point (Qᵢ) of said powertrain assembly (3),
i) if said engine power (P_{ICE}) is greater or equal than said gross power (Pᵣ), then determining the efficiency of said powertrain assembly 3 at said first operating point (Qᵢ).

3. Method according to claim 2, further comprising the step of recursively repeating steps d) to i) varying recursively said first operating point (Qᵢ), in order to reach the most efficient operating point (Q₁) of said powertrain assembly (3) able to meet the power request received in step a).

4. Method according to claim 1, 2 or 3, wherein said first operating point (Q₁) is determined based on the efficiency map of said powertrain assembly (3).

5. Method according to claim 4, wherein the efficiency map of said powertrain assembly (3) is determined on the basis of the combination of the efficiency map of said internal combustion engine (6) and the efficiency map of said drivetrain assembly (8).

6. Method according to claim 3, 4 or 5, the step of varying recursively said first operating point (Qᵢ) may comprise to vary said first operating point (Qᵢ) according to the maximum gradient of the efficiency of powertrain assembly (3).

7. Method according to any of the preceding claims, wherein said drivetrain assembly (8) is provided with an energy storage system operatively connected to said powertrain assembly (3) and configured to store at least part of the energy produced by said internal combustion engine (6),
said method further comprising the following steps:
j) determining if said operating point (Q₁) corresponds with the maximum efficiency point of said powertrain assembly (3) able to meet the power request received in said step a),
k) if said operating point (Q₁) corresponds with the maximum efficiency point of said powertrain assembly (3), operating said powertrain assembly (3) at said operating point (Q₁),
l) if operating point (Q₁) does not correspond with the maximum efficiency point (Q₂) of said powertrain assembly (3), then operating said powertrain assembly (3) at said maximum efficiency point (Q₂) and storing the exceeding power provided by said internal combustion engine (6) within said energy storage system.

8. Method according to claim 7, wherein said drivetrain assembly (8) is provided with a hybrid-electric configuration and comprises: a first electric machine (10) carried by said internal combustion engine (6); and a second electric machine (12), which is electrically connected to said first electric machine (10) and is mechanically connected to said ground engaging means (5);
said energy storage system comprising electric energy storage means (14), which are electrically connected to said first electric machine (10) and to said second electric machine (12) by means of electric power management means (16);
said step l) comprising the step operating said powertrain assembly (3) at its maximum efficiency point (Q₂) and providing the exceeding power to said first electric machine (10), in order to convert such power into electric energy to be stored within said electric energy storage means (14).

9. Method according to claim 7, wherein said drivetrain assembly (8) comprises a HYDROSTATIC transmission including a hydraulic pump carried by said internal combustion engine (6) and a hydraulic motor driven by said hydraulic pump and mechanically coupled to said ground engaging means (5);
said energy storage system comprising hydraulic energy storage means, which are fluidly connected to said hydraulic pump;
said step l) comprising the step operating said powertrain assembly (3) at its maximum efficiency point (Q₂) and providing the exceeding power to said hydraulic pump, in order to convert such power into hydraulic energy to be stored within said hydraulic energy storage means.

10. Method according to claim 7, wherein said energy storage system comprises mechanical energy storage means, in particular a flywheel;
said step l) comprising the step operating said powertrain assembly (3) at its maximum efficiency point (Q₂) and providing the exceeding power provided by said internal combustion engine (6) to said mechanical energy storage means.

11. Method according to any of the preceding claims, further comprising the steps of:
m) determining if the output torque of internal combustion engine (6) associated with the operating point (Q₁) determined in said step b) exceeds a predetermined threshold (T); and
n) if the output torque of internal combustion engine (6) associated with the operating point (Q₁) determined in said step b) exceeds said predetermined threshold (T), controlling said internal combustion engine (6) to operate at the angular speed (ωₘₐₓ) corresponding to the maximum output power of said internal combustion engine (6).

12. A work vehicle comprising:
• a body movable on the ground by means of a plurality of ground-engaging means (5);
• a powertrain assembly (3) carried by said body and comprising an internal combustion engine (6) and a drivetrain assembly (8) operatively interposed between said internal combustion engine (6) and said ground-engaging means (5); and
• an electronic control unit (24), which is electrically connected to said powertrain assembly (3) and is provided with elaboration means configured to carry out the method according to any of the preceding claims.

13. A method for controlling a work vehicle (1) and trailer combination;
said work vehicle (1) comprising:
• a body movable on the ground by means of a plurality of ground-engaging means (5); and
• a powertrain assembly (3) carried by said body and comprising an internal combustion engine (6) and a drivetrain assembly (8) operatively interposed between said internal combustion engine (6) and said ground-engaging means (5);
said trailer comprising an energy storage system operatively connected to said powertrain assembly (3) and configured to store at least part of the energy produced by said internal combustion engine (6),
said method comprising the steps of:
o) receiving a request to operate said powertrain assembly (3) to provide at output a useful power (Pᵢ);
p) determining the operating point (Q₁) of said powertrain assembly (3) wherein said powertrain assembly (3) is able to provide at output said useful power (Pᵢ) and at the same time has the maximum efficiency, and
q) determining if said operating point (Q₁) corresponds with the maximum efficiency point of said powertrain assembly (3) able to meet the power request received in said step a),
r) if said operating point (Q₁) corresponds with the maximum efficiency point of said powertrain assembly (3), operating said powertrain assembly (3) at said operating point (Q₁),
s) if operating point (Q₁) does not correspond with the maximum efficiency point (Q₂) of said powertrain assembly (3), then operating said powertrain assembly (3) at said maximum efficiency point (Q₂) and storing the exceeding power provided by said internal combustion engine (6) within said energy storage system.

14. Method according to claim 13, wherein said trailer comprises a baler and/or wherein said energy storage system comprises a mechanical energy storage system, in particular a flywheel.

15. A work vehicle and trailer combination comprising:
• a work vehicle provided with a body movable on the ground by means of a plurality of ground-engaging means (5); a powertrain assembly (3) carried by said body and comprising an internal combustion engine (6) and a drivetrain assembly (8) operatively interposed between said internal combustion engine (6) and said ground-engaging means (5); and an electronic control unit (24), which is electrically connected to said powertrain assembly (3) and is provided with elaboration means configured to carry out the method according to claim 13 or 14; and
• a trailer comprising an energy storage system operatively connected to said powertrain assembly (3) and configured to store at least part of the energy produced by said internal combustion engine (6).
